**Europäisches Patentamt**

**European Patent Office**

**Office européen des brevets**

(11) Veröffentlichungsnummer: **0 285 093**
**A2**

## EUROPÄISCHE PATENTANMELDUNG

(21) Anmeldenummer: 88105075.1

(22) Anmeldetag: 29.03.88

(51) Int. Cl.⁴: **G01N 27/04**

(30) Priorität: 02.04.87 DE 3711167
25.11.87 DE 3739857

(43) Veröffentlichungstag der Anmeldung:
05.10.88 Patentblatt 88/40

(84) Benannte Vertragsstaaten:
**DE FR GB IT**

(71) Anmelder: **DEUTSCHES INSTITUT FÜR KAUTSCHUKTECHNOLOGIE e.V.**
**Eupener Strasse 33**
**D-3000 Hannover 81(DE)**

(72) Erfinder: **Räbiger, Norbert, Dr.-Ing.**
**Meisenweg 8**
**D-5204 Lohmar 1(DE)**
Erfinder: **Friedl, Susanne, Dipl.-Phys.**
**Velberstrasse 11**
**D-3000 Hannover 91(DE)**

(74) Vertreter: **Thömen, Uwe, Dipl.-Ing.**
**Patentanwalt U. Thömen Zeppelinstrasse 5**
**D-3000 Hannover 1(DE)**

(54) Verfahren und Vorrichtung zur Bestimmung der Russverteilung in einem russhaltigen Medium.

(57) Ein Verfahren, die Homogenität rußhaltiger Medien, insbesondere Kautschuk und Vulkanisaten festzustellen, bildet die Bestimmung der Rußverteilung durch elektrische Widerstandsmessung. Die Auswertung des mittleren Widerstandes setzt aber voraus, daß die Meßvorrichtung bei Konzentrationsänderungen der rußhaltigen Bestandteile oder Veränderungen der Zusammensetzung kalibriert wird.

Dies ist zeitaufwendig und eignet sich nicht für Produktionsbedingungen. Die Erfindung schafft Abhilfe durch ein Verfahren und eine Vorrichtung, mit der es gelingt, die Rußverteilung aus den gewonnenen Werten selbst zu ermitteln. Dies geschieht dadurch, daß Widerstandswerte oder Leitwerte eines Probevolumens des Mediums gleichzeitig oder in kurzen zeitlichen Abständen in unterschiedlichen Richtungen gemessen werden. Aus den sich ergebenden Meßwerten werden die Abweichungen bestimmt, vorzugsweise wird die Varianz er rechnet. Die Abweichungen bzw. die Varianz sind dann ein Maß für die Rußverteilung.

FIG.5

EP 0 285 093 A2

0 285 093

## Verfahren und Vorrichtung zur Bestimmung der Rußverteilung in einem rußhaltigen Medium

Die Erfindung betrifft ein Verfahren zur Bestimmung der Rußverteilung in einem rußhaltigen Medium gemäß dem Oberbegriff des Anspruchs 1.

Zur Erzielung einer gleichbleibenden Qualität bei Kautschuk und Vulkanisaten ist es erforderlich, die Mischgüte der Kautschukmischung zu überwachen. Neben optischen, elektronenoptischen und dynamischen Meßverfahren ist auch die Messung des elektrischen Widerstandes anwendbar, wenn es sich um ein rußhaltiges Medium handelt. Dies ist bei Kautschuk und Vulkanisaten der Fall, da durch den Rußzusatz bestimmte mechanische Produkteigenschaften gezielt eingestellt werden können.

Die Abhängigkeit des elektrischen Widerstandes von der Rußverteilung beruht darauf, daß zu Beginn des Mischprozesses vorliegende getrennte Phasen von Ruß und Kautschuk unter vorübergehender Kettenbildung allmählich ineinander übergehen. Dabei ist zu Beginn des Mischvorganges der Widerstand sehr groß. Im weiteren Verlauf bilden sich dann einzelne Rußbrücken, welche zu einer Absenkung des Widerstandsniveaus führen. Mit zunehmender Mischzeit werden die einzelnen Rußpartikel mehr und mehr von isolierendem Kautschuk umhüllt, so daß der Widerstand der Mischung wieder ansteigt. Der mittlere elektrische Widerstand stellt also ein Maß für die Rußverteilung in einem rußhaltigen Medium dar. Allerdings ist der Widerstandswert nicht nur von der Rußverteilung, sondern auch von der Gesamtmenge an Ruß in dem zu untersuchenden Medium abhängig. Hinzu kommen noch der Einfluß der Rußtype und Temperatur- und Druckeinflüsse. Die Messung des Widerstandes über der Zeit erfordert daher eine genaue Kenntnis des Widerstandsverlaufs über der Mischzeit für die jeweilige Ruß-Kautschukmischung, was sowohl die Überwachung bei laufender Produktion erschwert als auch wegen der Ungenauigkeit des Verfahren eventuell zusätzliche Verfah ren zur Bestätigung der gewonnenen Ergebnisse benötigt. Die Unsicherheit beruht auf den bei der Kalibrierung zu berücksichtigenden vielfachen Einflüssen, bei denen teilweise nur von Annahmen ausgegangen werden kann.

Zur Durchführung des bekannten Verfahrens ist auch eine Probenkammer mit einer Elektrodenanordnung vorgeschlagen worden, die eine Zentralelektrode und eine diese umgebende Ringelektrode umfaßt. Mit dieser Vorrichtung konnte nachgewiesen werden, daß zu gleichen Meßzeiten alle Proben einer Charge den gleichen Widerstandswert erbringen. Ein Rückschluß auf die Rußverteilung im Medium erfordert bei dieser Vorrichtung zusätzlich Vergleichswerte, die bei einer Mischung aus den gleichen Komponenten unter gleichen Randbedingungen ermittelt wurden.

Der Erfindung liegt die Aufgabe zugrunde, das bekannte Verfahren dahingehend zu verbessern, daß durch Messung der Widerstandswerte innerhalb eines rußhaltigen Mediums ohne Vergleichswerte unmittelbar auf die Rußverteilung geschlossen werden kann.

Diese Aufgabe wird bei einem Verfahren nach dem Oberbegriff des Anspruchs 1 durch die im kennzeichnenden Teil angegebenen Merkmale gelöst.

Die Erfindung nutzt die Erkenntnis aus, daß die zu Beginn des Mischvorganges vorhandenen Rußbrücken zunächst noch zusammenhängen und sich der Ausrichtung des sie umgebenden umgewälzten Mediums anpassen. Dadurch ist der Widerstandsverlauf innerhalb der Probe richtungsabhängig. Er ist nämlich in Richtung einer Rußbrücke klein, in einer senkrecht dazu liegenden Ebene dagegen groß. Wird der Widerstand in verschiedenen Richtungen ermittelt, so werden unterschiedliche Widerstandswerte gemessen. Mit zunehmender Vermischung und Verteilung der Rußteilchen werden die Unterschiede der Widerstandswerte immer geringer. Durch die Berechnung der Varianz der Widerstandswerte ist so eine Aussage über die Rußverteilung möglich. Da die Streuung der Widerstandswerte ermittelt wird, ist der Absolutwert des Widerstandes unerheblich. Mit Hilfe des Verfahrens ist eine sehr schnelle Aussage über die Rußverteilung möglich, so daß das Verfahren besonders im laufenden Produktionsgang eingesetzt werden kann.

Vorzugsweise werden die Meßwerte über gleiche Meßentfernungen gewonnen. Die Meßstrecken sind dabei so angeordnet, daß sie strahlenförmig von einem gemeinsamen Zentrum ausgehen.

Die gleichen Meßentfernungen erleichtern die Auswertung der Meßwerte, da keine Umrechnungen vorgenommen werden müssen. Außerdem ist mechanisch eine kompakte, übersichtliche Anordnung der Elektroden möglich. Durch die strahlenförmige Anordnung kann eine Elektrode als Gegenelektrode für alle anderen Elektroden dienen. Auf diese Weise läßt sich die Meßzeit für hochohmige Proben erheblich reduzieren.

In praktischer Ausgestaltung werden die Meßwerte fortlaufend im Zeitmultiplex gewonnen.

Diese Maßnahme beschränkt den meßtechnischen Aufwand auf ein gemeinsames Strommeßgerät für alle Meßstrecken und gewährleistet ferner, daß dieselben Randbedingungen zur Durchfürhung der Messungen vorliegen.

2

Eine Weiterbildung sieht vor, die Meßwerte in unterschiedlichen Ebenen zu gewinnen. Dazu werden in das Probevolumen des Mediums die Elektroden mit einer konstanten Vorschubgeschwindigkeit vorangetrieben.

Diese Maßnahmen ermöglichen, bei der Messung der Widerstands-oder Leitwerte auch die dritte Dimension zu berücksichtigen, um so einen noch besseren Aufschluß über die Rußverteilung zu erhalten.

Die konstante Vorschubgeschwindigkeit sorgt dafür, daß zwischen den Elektroden und dem Medium ein einheitlicher Andruck besteht, so daß auch einheitliche Übergangswiderstände zwischen den Elektroden und dem Medium vorliegen.

In praktischer Ausgestaltung ist an die zentrale Elektrode Meßpotential und an die äußeren Elektroden Bezugspotential angelegt.

Dadurch wird ein gleichmäßiges rotationssymmetrisches Feld erzeugt, das für alle Meßstrecken gleiche Randbedingungen bildet und daher eine wesentliche Voraussetzung für vergleichbare Teilmeßergebnisse - schafft.

Bei einer bevorzugten Ausführungsform werden die Meßwerte digitalisiert und einem Personal-Computer zur Auswertung zugeführt. Dieser stellt die Varianz der Meßwerte als Rußverteilung graphisch zu einem Mischzustand (Zeitpunkt) dar.

Diese Ausgestaltung ermöglicht eine schnelle Berechnung der Varianz durchzuführen und gestattet es, die Werte in einer mit einem Blick erfaßbaren Darstellung anzuzeigen.

Die Erfindung betrifft ferner eine Vorrichtung zur Bestimmung der Rußverteilung in einem rußhaltigen Medium nach dem Oberbegriff des Anspruchs 10.

Diesbezüglich liegt die Aufgabe zugrunde, eine Vorrichtung zu schaffen, die durch Messen der Widerstandswerte innerhalb eines rußhaltigen Mediums unmittelbar die Angabe der Rußverteilung ermöglicht.

Diese Aufgabe wird bei einer Vorrichtung nach dem Oberbegriff des Anspruchs 10 durch die im kennzeichnenden Teil angegebenen Merkmale gelöst.

Die Erfindung nutzt die Erkenntnis aus, daß die zu Beginn des Mischvorganges noch in getrennten Phasen vorliegenden Ruß-und Mediumbestandteile unter vorübergehender Brückenbildung einander gegenseitig durchdringen. Dadurch ergeben sich unterschiedliche Widerstands-oder Leitwerte in Abhängigkeit der Richtung, in der Rußbrücken angeordnet sind. In Richtung der Rußbrücken ist der Widerstand sehr klein während er in Gegenrichtung, also in einer senkrecht zur Achse der Rußbrücke verlaufenden Ebene sehr groß ist.

Durch Messen des Widerstands-oder Leitwertes in ver schiedenen Richtungen innerhalb desselben Probevolumens werden unterschiedliche Meßwerte gewonnen. Diese Meßwerte weichen von einem Mittelwert nach oben und nach unten hin ab. Erst mit zunehmender Vermischung werden die Rußbrücken soweit gekürzt, daß immer kleinere Rußteilchen von dem isolierenden Medium umgeben werden, wodurch sich der Widerstands-oder Leitwert der einzelnen Meßstrecken einem Mittelwert annähert. Sein Absolutwert ist gegenüber dem Zeitraum, in dem noch Rußbrücken vorliegen, größer.

Durch Berechnung der Abweichungen der einzelnen Meßwerte, vorzugsweise der Varianz läßt sich ein Maß für die Rußverteilung erhalten. Die Absolutwerte der Widerstandswerte oder Leitwerte wie auch die aus den Einzelmessungen gewonnenen Mittelwerte sind unerheblich, da sie sich bei der Berechnung der Varianz herausheben. Maßgeblich sind immer nur die während eines Zeitintervalls gemessenen Werte aller Richtungen.

Vorzugsweise besitzen die Elektroden der Elektrodenanordnung gleiche Abstände, wobei sich ein Wert von 15 mm als günstig erwiesen hat.

Dieser Abstand gestattet vergleichende Widerstandsmessungen ohne Umrechnungen durchzuführen. Dabei ist der Abstand so bemessen, daß der Widerstand auch für hochohmige Proben meßbar bleibt, andererseits der Abstand größer als die größten, in der Praxis relevanten Spaltbreiten in Mischmaschinen ist.

Bei einer praktischen Ausgestaltung umfaßt die Elektrodenanordnung eine zentrale Elektrode und sternförmig dazu angeordnete Außenelektroden.

Die acht Elektroden ermöglichen eine ausreichende Richtungsauswahl bei der Messung der Widerstandswerte oder Leitwerte zu treffen. Durch die gemeinsame Zentralelektrode werden in jeder Richtung zwei Messungen durchgeführt, so daß auch einmalige "Ausreißer" bei den Meßwerten erkannt werden können. Die errechnete Varianz stellt daher einen repräsentativen Wert für die Rußverteilung dar.

Gemäß einer praktischen Ausgestaltung bestehen die Elektroden aus einem kegelförmigen Kopf, der am Ende eines mit einer Isolierhülle überzogenen Schaftes angeordnet ist.

Hierdurch erhält man während des Einfahrens in die Probe eine konstante Ankopplung der Elektroden an das Pro benmedium, verbunden mit gleichen Übergangswiderständen von den Elektroden zum Kautschuk in den verschiedenen Meßebenen. Darüberhinaus wird das Eindringen der Elektroden in das Medium erleichtert.

In Ergänzung zu der vorgenannten Ausgestaltung weist die Isolierhülle den gleichen Durchmesser wie der kegelförmige Kopf an der dicksten Stelle auf, oder wird zunächst im gleichen Winkel weitergeführt.

Diese Ausgestaltung vermeidet eine Hinterschneidung der Elektroden, so daß auch das Herausziehen aus dem Medium ohne Widerstand möglich ist.

Bei einer bevorzugten Ausgestaltung umfaßt die Elektrodenanordnung einen axial verlagerbaren Stempel.

Dadurch läßt sich die Elektrodenanordnung als Ganzes handhaben und so in Probebehälter oder in Produktionsanlagen absenken.

In Weiterbildung der Erfindung besitzt der Stempel eine zylindrische Halterung aus PTFE.

Dieser Werkstoff ist extrem temperaturbeständig, so daß auch Mischungen unter Produktionsbedingungen gemessen werden können. Darüberhinaus besitzt er auch hervorragende Isolationseigenschaften, was bei Messungen hoher Widerstandswerte bei geringer Rußkonzentration wichtig ist, um Nebenschlußfehler zu vermeiden.

Bei einer bevorzugten Ausführung trägt der Stempel eine Bohrung mit einer Kugel zur definierten Krafteinleitung.

Durch diese Ausgestaltung wird in einfacher Weise eine Umsetzung von einer Drehbewegung in eine Längsbewegung erzielt, so daß der Stempel exakt dosierbar sowohl manuell als auch motorisch bewegbar ist. Der Stempel wird mit Hilfe eines Motors mit konstanter Geschwindigkeit bewegt.

Gemäß einer Weiterbildung ist ein Probenbehälter vorgesehen, der eine Abschirmkammer, eine stirnseitige Isolierscheibe und einen Distanzring umfaßt.

Diese konstruktive Ausgestaltung ermöglicht auch bei sehr hohen Widerstandswerten eine störungsfreie Messung. Dabei wird das Probevolumen des Mediums vor der elektrisch leitenden Schicht der Abschirmung durch die Isolierscheibe und gegebenenfalls auch den isolierenden Distanzring ferngehalten. Ein unerwünschter Nebenschluß der Meßstrecken zwischen den Elektroden über die Abschirmung wird auf diese Weise verhindert. Außerdem bildet der Distanzring einen Anschlag für ein zu tiefes Eintauchen der Elektrodenanordnung in den Probebehälter. Dadurch wird eine Beschädigung der Elektroden vermieden.

Eine vorteilhafte Ausgestaltung sieht vor, daß die Elektrodenanordnung eine Abschirmung trägt.

Dadurch wird die Abschirmwirkung auch nach oben hin vervollständigt, so daß die Messungen besonders bei hochohmigen Widerständen nicht mehr durch elektromagnetische Fremdfelder beeinflußt werden können.

Vorzugsweise sind die Elektroden mit dem Meßgerät über einen Meßstellenumschalter verbunden. Diese Maßnahme gestattet es, die Messungen im Zeitmultiülex durchführen zu können. Das Meßgerät kommt dadurch mit einer einzigen Spannungsquelle und einem einzigen Strommeßgerät aus. Außerdem wird gewährleistet, daß alle Meßwerte einheitlich gewonnen werden und so kein im unterschiedlichen Spannungsquellen oder Strommeßgeräten liegender Systemfehler die Genauigkeit der Meßergebnisse beeinträchtigen kann.

In Weiterbildung der Erfindung ist jeweils eine der äußeren Elektroden über den Meßstellenumschalter im Zeitmulti plex an Meßpotential anlegbar, während die übrigen Elektroden an Bezugspotential gelegt sind.

Diese Maßnahmen schaffen ein gleichmäßiges rotationssymmetrisches Feld, das durch die Einbeziehung der übrigen Elektroden stabilisiert wird. Dieses Feld bleibt während des gesamten Meßzyklus konstant. Es wird so verhindert, daß durch das Meßfeld erzeugte Intitialströme das Meßergebnis verfälschen.

Zweckmäßig ist die Speicher-und Recheneinrichtung, mit der das Meßgerät verbunden ist, ein Personal-Computer, dessen Programmspeicher ein eine Varianzberechnung durchführendes Programm enthält.

Diese Ausgestaltung ist besonders universell und preisgünstig und ermöglicht durch die Echtzeitanzeige eine besonders wirtschaftliche Überwachung der Rußverteilung mit der Möglichkeit, auch rechtzeitig steuernd in einen Produktionsprozeß eingreifen zu können.

Weiterbildungen und vorteilhafte Ausfihrungsformen der Erfindung ergeben sich aus den Ansprüchen, der Beschreibung und der Zeichnung, anhand der das Verfahren und die Vorrichtung der Erfindung erläutert werden.

In der Zeichnung zeigen:

Fig. 1 eine räumliche Darstellung von Rußteilchen in einem Medium,

Fig. 2 den Verlauf des mittleren Widerstandes als Funktion der Mischzeit und der Rußverteilung,

Fig. 3 den Verlauf der richtungsabhängigen Widerstandswerte als Funktion der Mischzeit und der Rußverteilung,

Fig. 4 den Verlauf der Varianz als Funktion der Mischzeit und der Rußverteilung.

Fig. 5 einen Längsschnitt durch einen Probenbehälter mit einer Elektrodenanordnung nach der Erfindung,

Fig. 6 einen Längsschnitt durch eine Elektrode, und

Fig. 7 eine erfindungsgemäße Vorrichtung als Prinzipschaltbild.

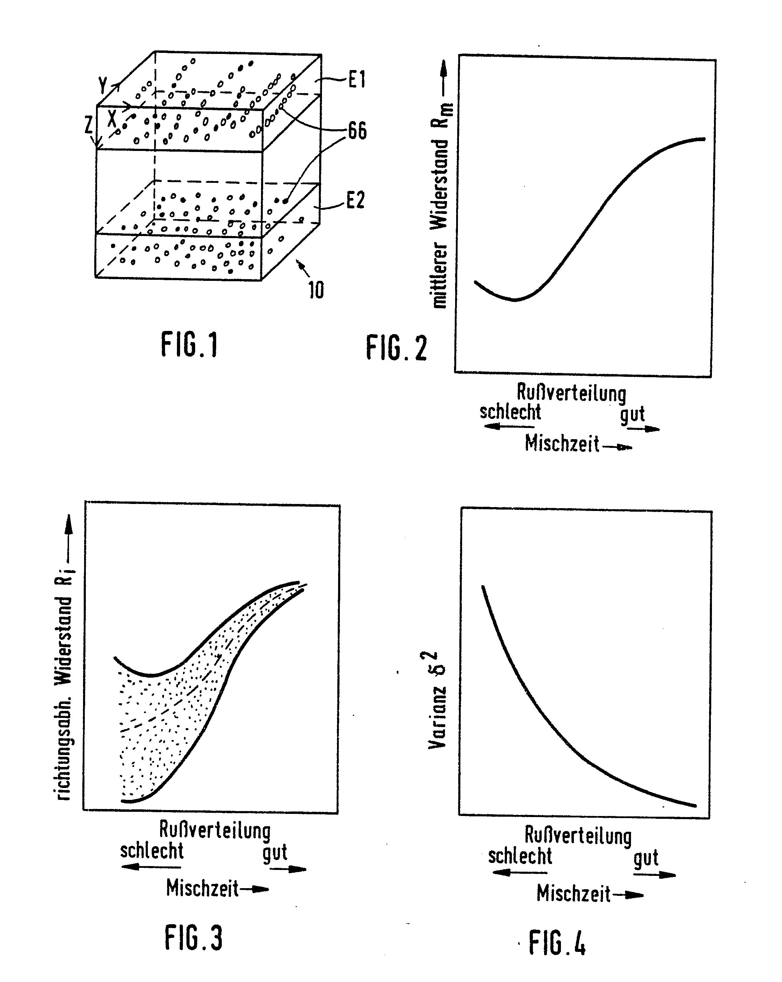

In Fig. 1 ist in einer oberen Ebene $E_1$ die zu Beginn eines Mischvorganges vorherrschende Anordnung von Rußteilchen 66 in einem Medium 10 gezeigt. Ein Koordinatensystem X, Y, Z dient als Bezug für die Ausrichtung einer aus den Rußteilchen 66 gebildeten Rußkette.

Eine darunterliegende Ebene $E_2$ zeigt den Zustand nach längerer Mischzeit. Da die Rußteilchen als Träger der elektrischen Leitung dienen, ist der elektrische Widerstand in Richtung der Rußkette am geringsten, in einer senkrechten Ebene dazu am größten. Mißt man nun in mehreren Richtungen den Widerstand, so erhält man mehrere Werte die sehr weit nach oben und unten von einem Mittelwert abweichen. Die Abweichungen vom Mittelwert, z.B. die nach einer mathematischen Formel berechnete Varianz gibt ein Maß für die Rußverteilung im Medium an. Die Abweichungen und damit auch die Varianz sind bei den in der oberen Ebene erhaltenen Meßwerten sehr groß. In der unteren Ebene dagegen sind die Rußteilchen gleichmäße verteilt. Da es jetzt keine Vorzugsrichtung mehr gibt, wird auch der Widerstandswert in jeder Richtung etwa gleich sein. Die Abweichungen und damit die Varianz der Meßwerte geht also gegen Null.

Fig. 2 veranschaulicht den Verlauf des mittleren Widerstandes $R_m$ in Abhängigkeit der Rußverteilung und der Mischzeit. Solange am Anfang noch die Phasen von Ruß und Medium getrennt vorliegen, wird ein hoher Widerstandswert gemessen. Im weiteren Verlauf werden zusammenhängende Rußketten gebildet, die zu einem Absenken des mittleren Widerstandes führen. Schließlich werden die Ketten mehr und mehr zerrissen und die einzelnen Rußteilchen von isolierenden Mediumbestandteilen umschlossen, so daß der Widerstand wieder zunimmt.

Dieser Zusammenhang wird bei bekannten Verfahren zur Feststellung der Rußverteilung ausgewertet. Man erkennt allerdings, daß die nicht gleichförmige Funktion der Abhängigkeit der Rußverteilung eine ständige Überwachung verlangt, wenn eine Fehlinterpretation der Meßergebnisse sicher vermieden werden soll. Außerdem ist bei jeder Veränderung der Rußkonzentration und der Mischungskomponenten sowie des Drucks und der Temperatur eine Kalibrierung notwendig. Da diese Faktoren nämlich zu einer Parallelverschiebung der in Fig. 2 dar gestellten Funktion in vertikaler Richtung führen, ist die Verwertung der Absolutwerte für sich, also ohne Kalibrierung, unbrauchbar.

In Fig. 3 ist der Verlauf der richtungsabhängigen Widerstände $R_i$ dargestellt. Die möglichen Werte liegen innerhalb eines von den Extremwerten gebildeten Bereiches. Die Breite dieses Bereiches, der durch die Abweichungen vom Mittelwert gegeben ist, verringert sich mit Fortschreiten der Zeit bei zunehmender Rußverteilung. Dabei wird auch deutlich, daß die Absolutwerte keine Rolle spielen, denn die Parallelverschiebung in vertikaler Richtung bewirkt keine Veränderung des prinzipiellen Verlaufs der Breite des Bereiches über der Mischzeit.

In Fig. 4 ist die zu Fig. 3 gehörende Varianz 6 dargestellt. Der Verlauf läßt hier den unmittelbaren Zusammenhang zwischen der Varianz über der Mischzeit und der Rußverteilung erkennen.

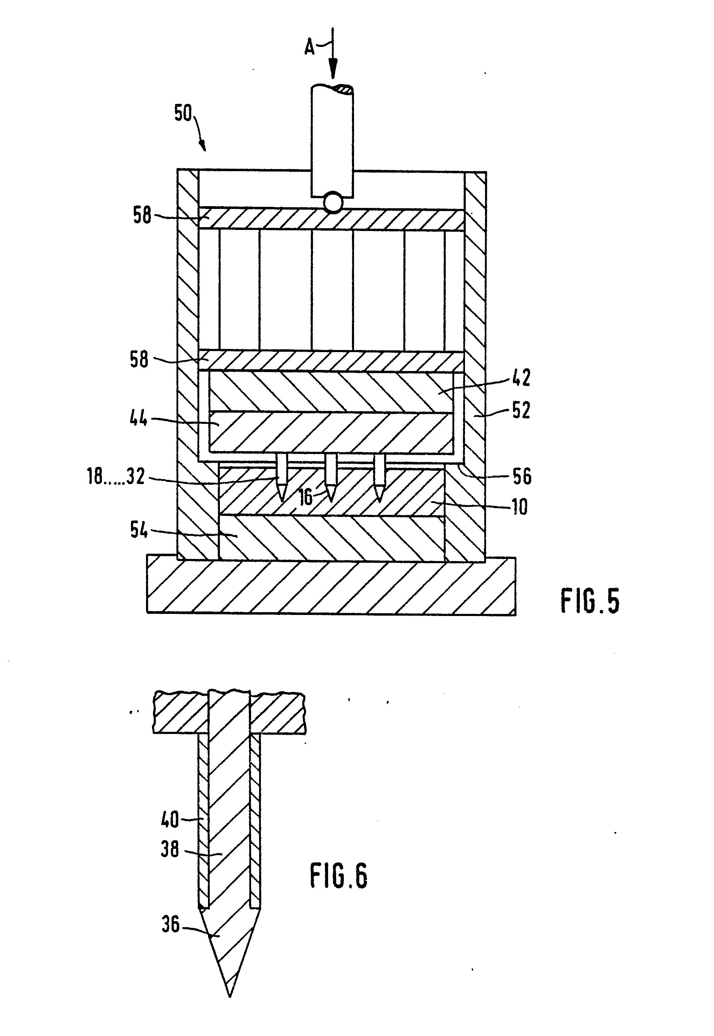

Fig. 5 zeigt einen Längsschnitt durch einen Probebehälter 50 mit einer Elektrodenanordnung 12 nach der Erfindung. Der Probenbehälter 50 besteht aus einer becherförmigen Abschirmkammer 52, auf dessen unterem Boden eine Isolierscheibe 54 liegt. Ein Ansatz 56 bildet einen Anschlag für einen Stempel 42, an dem auf einer zylindrischen Halterung 44 aus PTFE (Teflon) Elektroden 18...32 angeordnet sind, die durch eine Abschirmung 58 geschützt sind.

Durch den Pfeil A ist angedeutet, daß auf den Stempel 42 eine Kraft ausgeübt wird, so daß der Stempel 42 bei gleichmäßiger Geschwindigkeit nach unten (oder nach oben) verfahren werden kann. Beim Abwärtsfahren tauchen die Elektroden 16...32 in ein Probevolumen eines rußhaltigen Mediums 10 ein.

Wird zwischen die Zantralelektrode 16 und eine der auf einem Kreisring in gleichmäßigen Abständen angeordneten Außenelektroden 18...32 eine Spannung angelegt, so kann durch Strommessung der zwischen den beiden Elektroden, z.B. 16 und 18 auftretende Widerstandswert oder Leitwert des Mediums gemessen werden. Durch weiteres Absenken des Stempels 42 sind Messungen in unterschiedlichen Ebenen, z.B. $E_1$ und $E_2$ in Fig. 1 möglich.

Die konstruktive Ausgestaltung der Elektroden 16...32 ist aus Fig. 6 ersichtlich, die eine solche Elektrode im Längsschnitt zeigt. Die Elektrode besteht aus einem kegelförmigen Kopf 36 und einem Schaft 38, der als mechanischer Träger und als elektrischer Leiter dient. Der Schaft 38 ist mit einer Isolierhülle 40 umgeben, die hier den gleichen Durchmesser wie der Kopf 36 an seiner dicksten Stelle aufweist.

Die kegelförmige Fläche des Kopfes 36 stellt elektrisch eine sehr gute Verbindung bei geringer Querschnittsfläche zwischen dem Medium 10 und der betreffenden Elektrode 16...32 her. Mechanisch erleichtert sie das Eindringen in zähflüssige Medien. Die Isolierhülle 40 verhindert elektrisch, daß auch der Schaft 38 als Elektrode wirkt und dann der Kontaktwiderstand beim Vorschub in vertikaler Richtung verändert wird. Mechanisch schafft die Isolierhülle 40 einen glatten Übergang zum Kopf 36 und vermeidet so ein Hintergreifen des Kopfes 36 durch das Medium 10 beim Herausziehen der Elektrodenanordnung 12.

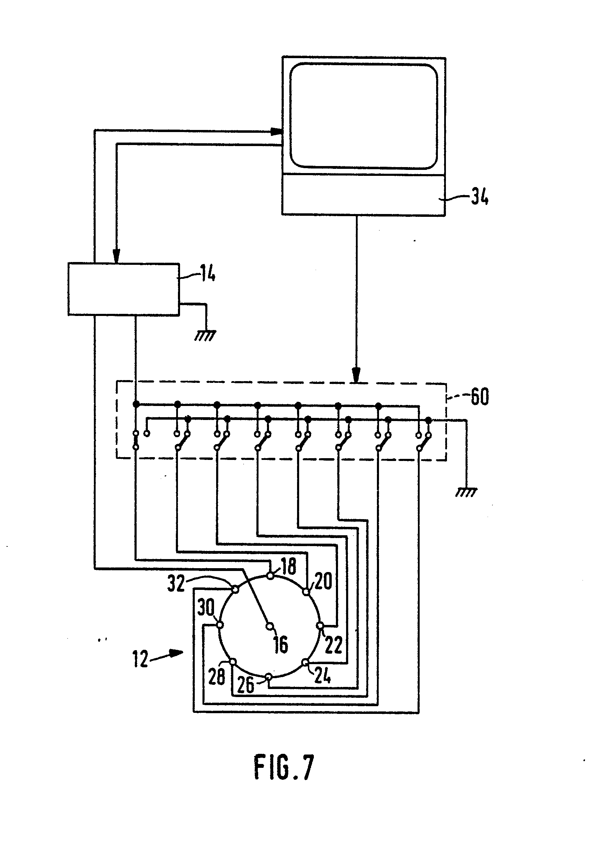

Eine Draufsicht auf die Elektrodenanordnung 12 sowie deren Verbindung mit den weiteren Komponenten der erfindungsgemäßen Vorrichtung ist in Fig. 7 dargestellt.

Die Vorrichtung umfaßt ein Meßgerät, z.B. ein Strommeßgerät 14 mit einem Meßstellenumschalter 60 und einem als Speicher-und Recheneinheit 34 dienenden Personal-Computer. Die Elektrodenanordnung 12 besitzt eine Zentralelektrode 16 und acht Außenelektroden 18...32, die auf einem Ring gleichmäßig verteilt angeordnet sind. Sie weisen einen Abstand zur Zentralelektrode 16 von 20 mm auf.

Die Elektroden 16...32 sind über Verbindungsleitungen mit dem Strommeßgerät 14 verbunden. Während die Zentralelektrode 16 direkt verbunden ist und ein Meßpotential erhält, sind die übrigen Außenelektroden 18...32 zu einem Meßstellenumschalter 60 geführt, der durch den Personal-Computer 34 im Zeitmultiplex geschaltet wird. Dabei wird immer eine Elektrode zum Strommeßgerät 14 durchgeschaltet, im dargestellten Beispiel die Außenelektrode 18, während die übrigen Elektroden also im dargestellten Fall 20...32 an Bezugspotential liegen. Auch die an das Meßgerät 14 geführte Elektrode 18 liegt an Bezugspotential, jedoch wird der fließende Strom von einem Meßgerät erfaßt. Durch die Umschalter wird ein konstantes elektrisches Feld erzeugt, das einheitliche Meßbedingungen schafft.

Außerdem wird so auch das Eindringen von Störspannungen auf den Verbindungsleitungen zu den Elektroden verhindert.

Die Schalter des Meßstellenumschalters sind als spezielle Wechselschalter für niedrige Ströme ausgebildet. Die Meßmöglichkeit von bis zu $10^{14}$ Ohm erfordert sorgfältige Abschirmmaßnahmen der Probe sowie der Elektrodenanordnung. Ein weiteres Problem können Initialströme bilden, die durch die Ausbildung von Ionenschichten im Isolator zustande kommen. Hierdurch kann es notwendig sein, durch entsprechende Steuerung des Meßgerätes 14 oder des Personal-Computers 34 den Widerstand erst nach einer gewissen Stabilisierungszeit nach Anlegen der Meßspannung auszuwerten. Da außerdem Isolierstoffe die Eigenschaft haben, daß ihr Widerstand nicht spannungsabhängig ist, wird vorzugsweise mit möglichst niedrigen Meßspannungen gearbeitet. Dadurch müssen allerdings die Anforderungen an das verwendete Meßgerät 14 hochgeschraubt werden.

Der Personal-Computer 34 dient dazu, die vom Meßgerät 14 gewonnenen Meßwerte, die dem Personal-Computer 34 in digitalisierter Form übermittelt werden, zu speichern und auszuwerten. Die Auswertung erfolgt dabei zweckmäßig durch Berechnung der Varianz der Meßwerte:

Empirische Varianz einer Stichprobe:

$$\sigma^2 = 1/(N-1) \cdot \left( \sum_{i=1}^{N} R_i^2 - N \cdot \langle R \rangle^2 \right)$$

Dabei ist $R_i$ der richtungsabhängige Widerstand und N die Anzahl der Richtungen, in denen Widerstände gemessen werden. Die Varianz kann dann als Rußverteilung bezeichnet und auf dem Sichtgerät des Personal-Computers 34 über der Zeitachse dargestellt werden.

## Ansprüche

1. Verfahren zur Bestimmung der Rußverteilung in einem rußhaltigen Medium, insbesondere in Kautschuk und Vulkanisaten, durch elektrische Widerstandsmessung, dadurch gekennzeichnet, daß Widerstandswerte oder Leitwerte eines Probevolumens des Mediums gleichzeitig oder in kurzen zeitlichen Abständen in unterschiedlichen Richtungen gemessen werden und daß die Abweichungen von einem Mittelwert, vorzugsweise die Varianz der Meßwerte ermittelt werden.

2. Verfahren nach Anspruch 1, dadurch gekennzeichnet, daß die Meßwerte über gleiche Meßentfernungen gewonnen werden.

3. Verfahren nach Anspruch 1, dadurch gekennzeichnet, daß die Meßwerte über Meßstrecken gewonnen werden, die strahlenförmig von einem gemeinsamen Zentrum ausgehen.

4. Verfahren nach einem oder mehreren der Ansprüche 1 - 3, dadurch gekennzeichnet, daß die Meßwerte fortlaufend im Zeitmultiplex gewonnen werden.

5. Verfahren nach einem oder mehreren der Ansprüche 1 - 4, dadurch gekennzeichnet, daß die Meßwerte in unterschiedlichen Meßebenen gewonnen werden.

6. Verfahren nach Anspruch 5, dadurch gekennzeichnet, daß in das Probevolumen des Mediums Elektroden eingetaucht werden, die mit einer konstanten Vorschubgeschwindigkeit vorangetrieben werden.

7. Verfahren nach einem oder mehreren der Ansprüche 1 - 6, dadurch gekennzeichnet, daß an eine zentrale Elektrode Meßpotential und an äußere Elektroden Bezugspotential angelegt wird.

8. Verfahren nach einem oder mehreren der Ansprüche 1 - 7, dadurch gekennzeichnet, daß die Meßwerte digitalisiert und einem Personal Computer zur zeitverzögerten Auswertung zugeführt werden.

9. Verfahren nach Anspruch 8, dadurch gekennzeichnet, daß die Varianz der Meßwerte als Rußverteilung graphisch über der Mischzeit dargestellt wird.

10. Vorrichtung zur Bestimmung der Rußverteilung in einem rußhaltigen Medium (10), insbesondere Kautschuk und Vulkanisaten, bestehend aus einer Elektrodenanordnung (12) und einem damit verbundenen Strommeßgerät, (Widerstands-oder Leitwertmeßgerät) (14), dadurch gekennzeichnet, daß die Elektrodenanordnung (12) wenigstens zwei in unterschiedliche Richtungen angeordnete Elektrodenpaare (16; 18...32) umfaßt und daß das Meßgerät (14) mit einer Speicher-und Recheneinrichtung (34) zur Bestimmung der Abweichung der Meßwerte von einem Mittelwert, vorzugsweise zur Bestimmung der Varianz der Meßwerte verbunden ist.

11. Vorrichtung nach Anspruch 10, dadurch gekenn zeichnet, daß die Elektroden (16; 18...32) der Elektrodenanordnung (12) gleiche Abstände besitzen.

12. Vorrichtung nach Anspruch 11, dadurch gekennzeichnet, daß die Elektroden (18...32) einen Abstand von vorzugsweise ca. 15 bis 20 mm von der Mittelelektrode (16) aufweisen.

13. Vorrichtung nach einem oder mehreren der Ansprüche 10 - 12, dadurch gekennzeichnet, daß die Elektrodenanordnung (12) eine zentrale Elektrode (16) und sternförmig dazu angeordnete Elektroden (18...32) umfaßt.

14. Vorrichtung nach einem oder mehreren der Ansprüche 10 - 13, dadurch gekennzeichnet, daß acht Elektrodenpaare mit acht auf einem Kreisring gleichförmig angeordneten Elektroden (18...32) und einer Zentralelektrode (16) vorgesehen sind.

15. Vorrichtung nach einem oder mehreren der Ansprüche 10 - 14, dadurch gekennzeichnet, daß die Elektroden (16...32) aus einem kegelförmigen Kopf (36) bestehen, der am Ende eines mit einer Isolierhülle (40) überzogenen Schaftes (38) angeordnet ist.

16. Vorrichtung nach einem oder mehreren der Ansprüche 10 - 15, dadurch gekennzeichnet, daß die Elektrodenanordnung (12) einen axial geführten verlagerbaren Stempel (42) umfaßt.

17. Vorrichtung nach Anspruch 16, dadurch gekennzeichnet, daß der Stempel (42) eine zylindrische Halterung (44) aus PTFE (Teflon) besitzt.

18. Vorrichtung nach Anspruch 16 oder 17, dadurch gekennzeichnet, daß der Stempel (42) mit Hilfe eines Motors mit konstanter Geschwindigkeit bewegt wird.

19. Vorrichtung nach einem oder mehreren der Ansprüche 10 - 18, dadurch gekennzeichnet, daß ein das Probevolumen beim Eintauchen der Elektrodenanordnung (12) aufnehmender Probenbehälter (50) vorgesehen ist, der eine Abschirmkammer (52), eine stirnseitige Isolierscheibe (54) und einen Distanzring (56) umfaßt.

20. Vorrichtung nach einem oder mehreren der Ansprüche 10 - 19, dadurch gekennzeichnet, daß die Elektrodenanordnung (12) durch eine Abschirmung (58) abgeschirmt ist.

21. Vorrichtung nach einem oder mehreren der Ansprüche 10 - 20, dadurch gekennzeichnet, daß die Elektroden (18...32) mit dem Meßgerät (14) über einen Meßstellenumschalter (60) verbunden sind.

22. Vorrichtung nach einem oder mehreren der Ansprüche 10 - 21, dadurch gekennzeichnet, daß die zentrale Elektrode (16) an Meßpotential gelegt ist und an jeweils einer der äußeren Elektroden (18...32) über den Meßstellenumschalter (60) im Zeitmultiplex der Strom gemessen wird, während die übrigen Elektroden (18...32) an Bezugspotential gelegt sind.

23. Vorrichtung nach einem oder mehreren der Ansprüche 10 - 22, dadurch gekennzeichnet, daß die Speicher-und Recheneinrichtung (34), mit der das Meßgerät (14) verbunden ist, ein Personal Computer ist, dessen Programmspeicher ein eine Varianzberechnung durchführendes Programm enthält.

FIG.1

FIG.2

FIG.3

FIG.4

FIG.5

FIG.6

FIG.7